(19) Europäisches Patentamt
European Patent Office
Office européen des brevets

(11) **EP 4 707 895 A1**

(12) **EUROPEAN PATENT APPLICATION**

(43) Date of publication:
**11.03.2026 Bulletin 2026/11**

(21) Application number: **24198495.4**

(22) Date of filing: **04.09.2024**

(51) International Patent Classification (IPC):
*G02B 21/00* (2006.01)    *G02B 27/58* (2006.01)
*G01N 21/64* (2006.01)

(52) Cooperative Patent Classification (CPC):
**G02B 21/0076; G02B 21/008; G02B 27/58;**
G01N 21/6458

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Leica Microsystems CMS GmbH**
**35578 Wetzlar (DE)**

(72) Inventors:
• **Dr. Schumann, Christian**
  **35578 Wetzlar (DE)**
• **Dr. Friedrich, Lars**
  **35578 Wetzlar (DE)**
• **Dr. Walter, Kai**
  **35578 Wetzlar (DE)**

(74) Representative: **Schaumburg und Partner**
**Patentanwälte mbB**
**Mauerkircherstraße 31**
**81679 München (DE)**

(54) **IMAGE SCANNING MICROSCOPE AND METHOD**

(57)    An image scanning microscope (100, 200) comprises a detection arrangement (112, 204) comprising a beam splitting element (122) configured to receive detection light (120), to split the detection light (120) into two parts, to direct a first part (124a) of the detection light (120) into a first beam path (126a), and to direct a second part (124b) of the detection light (120) into a second beam path (126b). The first beam path (126a) comprises a spatially resolved detector (128, 202) configured to detect a spatial distribution of the intensity of the first part (124a) of the detection light (120). The second beam path (126b) comprises a spectrally resolved detector (130) configured to detect a spectral information of the second part (124b) of the detection light (120). The image scanning microscope (100, 200) further comprises a controller (116) configured to determine a spatial distribution of at least one fluorophore species in a sample (104) based on the spatial distribution of the intensity of the first part (124a) of the detection light (120) and the spectral information of the second part (124b) of the detection light (120).

Fig. 1

## Description

### Technical field

The invention relates to an image scanning microscope. The invention further relates to a method for determining a spatial distribution of at least one fluorophore species in a sample.

### Background

Image Scanning Microscopy (ISM) is an advanced fluorescence microscopy technique that improves the spatial resolution and signal-to-noise ratio beyond the capabilities of traditional confocal microscopy. In conventional confocal microscopy, a single point detector, such as a single photomultiplier tube, is used to detect the fluorescent light emitted from the sample. In the ISM approach, the point detector is replaced by a multi-element photodetector comprising a plurality of photodetector elements (pixels) arranged in a photodetector array. Each photodetector element in the array is configured to output a detector signal upon receiving fluorescent light. As the sample is scanned with a laser focus, each photodetector element detects a small part of an image of the illuminated sample at each scan position. Appropriate algorithms are then used to combine multiple parts of scan images to reconstruct a single high-resolution image of the sample.

While it is possible to use the information from the different photodetector elements to increase spatial image resolution and signal-to-noise ratio, one of the major limitations of current ISM is the limited usability of these photodetectors for quantifying the emitted fluorescence light in terms of its spectral content. Existing solutions, for example as described in F. Strasser et al., Biomed. Opt. Expr 10 (2019) 2513, are limited to a narrow band of the visible light spectrum and suffer from light loss due to the generation of higher diffraction orders and the use of only one polarization state.

### Summary

It is an object to provide a detection arrangement for an image scanning microscope and a method for determining a spatial distribution of at least one fluorophore species in a sample that allow the spatial distribution of at least one fluorophore species in a sample to be determined better than with known image scanning microscopes or methods.

The aforementioned object is achieved by the subject-matter of the independent claims. Advantageous embodiments are defined in the dependent claims and the following description.

The proposed image scanning microscope comprises an excitation unit configured to generate excitation light, and an objective lens directed at a sample space and configured to direct the excitation light into the sample space and to receive detection light from the sample space. The image scanning microscope also comprises a scanning unit arranged along a beam path between the excitation unit and the objective lens and configured to selectively direct the excitation light into different regions of the sample space via the objective lens. The image scanning microscope further comprises a detection arrangement comprising a beam splitting element configured to receive the detection light, to split the detection light into two parts, to direct a first part of the detection light into a first beam path, and to direct a second part of the detection light into a second beam path. The first beam path comprises a spatially resolved detector configured to detect a spatial distribution of the intensity of the first part of the detection light. The second beam path comprises a spectrally resolved detector configured to detect a spectral information of the second part of the detection light. The image scanning microscope further comprises a controller configured to determine a spatial distribution of at least one fluorophore species in a sample based on the spatial distribution of the intensity of the first part of the detection light and the spectral information of the second part of the detection light.

The present invention might be embodied in a detection arrangement as such which might be used for an image scanning microscope. The detection arrangement comprises a beam splitting element, a first beam path, a second beam path. The beam splitting element is configured to split detection light into two parts, to direct a first part of the detection light into the first beam path, and to direct a second part of the detection light into the second beam path. The first beam path comprises a spatially resolved detector configured to detect a spatial distribution of the intensity of a first part of the detection light. The second beam path comprises a spectrally resolved detector configured to detect a spectral information of a second part of the detection light. The detection arrangement may further comprise a controller configured to determine a spatial distribution of at least one fluorophore species in a sample based on the spatial distribution of the intensity of the first part of the detection light and a spectral information of the second part of the detection light. The spatial distribution of the at least one fluorophore species in the sample may also be determined by an external controller based on the spatial distribution of the intensity of the first part of the detection light and a spectral information of the second part of the detection light.

Preferably, the controller is configured to determine the spatial distribution of at least one, preferably of at least two fluorophore species in the sample based on the spatial distribution of the intensity of the first part of the detection light and the spectral information of the second part of the detection light. In an embodiment, the controller is configured to determine the spatial distribution of a concentration of the at least one fluorophore species in the sample. The controller may also be configured to determine the presence of the at least one fluorophore species in the sample. Varying environmental conditions may change the emission and/or excitation characteristics of a fluorophore. For example, varying pH levels can shift the emission wavelength of the fluorophore, and changes in temperature can alter its excitation efficiency and the fluorescence lifetime. Thus, in this document, the term fluorophore species is used to refer to a set of fluorophores grouped by their emission and/or excitation characteristics. Two different fluorophore species may be two different fluorophores, or the same fluorophore found in different regions of the sample, which each may have different environmental conditions. The fluorophores may be exogenous fluorophores that have been introduced into the sample, and/or endogenous fluorophores which naturally occur in the sample.

The sample is imaged with the image scanning microscope by scanning the sample with excitation light focused by the objective lens using the scanning unit. The excitation light excites the fluorophore species in the sample, which causes them to emit the detection light according to their intrinsic properties and the environmental conditions at the location of the fluorophore species in the sample. This detection light is collected by the objective lens and directed into the detection arrangement via the scanning unit, thereby descanning it. The descanned detection light is split into the first and second parts by the beam splitting element. The first part is directed into the first beam path, where the spatially resolved detector detects the spatial distribution of the intensity of the detection light. As the sample is scanned with the excitation light, at least one spatial distribution is detected at each scan position by the spatially resolved detector. From the collection of the spatial distributions a single high-resolution image of the sample can be reconstructed using algorithms known from Image Scanning Microscopy (ISM).

The second part is directed into the second beam path, where the spectrally resolved detector detects the spectral information of the detection light. The proposed image scanning microscope thereby expands upon the ISM approach by not only reconstructing the single high-resolution image from the spatial distributions, but also determining the spectral information of the detection light at each scan position. Thus, the proposed image scanning microscope not only enables image scanning microscopy with high spatial resolution and a high signal-to-noise ratio by detecting the first part of the detection light using the spatially resolved detector. By detecting the spectral information of the second part of the detection light at each scan position, the proposed image scanning microscope makes it possible to distinguish multiple different fluorophore species in the sample more robustly. In combination, this enables the determination of the spatial distribution of the at least one fluorophore species in the sample in the high spatial resolution and signal-to-noise ratio provided by the ISM approach.

In an embodiment the controller is configured to determine the spatial distribution of the at least one fluorophore species in the sample based on at least one image formation model that parametrizes the imaging behavior of the image scanning microscope. The at least one image formation model describes how the spatially resolved detector and/or the spectrally resolved detector detect the sample. Among the properties that may be described by the at least one image formation model are the excitation PSF (Point Spread Function), the emission PSF, and the properties of the detectors, such as individual detector elements, their size, their spatial arrangement, and their spectral sensitivity. The at least one image formation model may be used in combination with a database of different fluorophore species, for example, to determine how a fluorophore species would be detected by the spatially resolved detector and/or by the spectrally resolved detector. To determine which fluorophore species are present in the sample, the controller may then, for example, minimize a cost function that characterizes a distance between the measured signal and a signal reconstructed or inferred using the database and the at least one image formation model. The database and the at least one image formation model may each be stored in a local or remote memory element or in a cloud service.

In another embodiment a first image formation model has an arbitrary spatial distribution of the at least one fluorophore species in the sample as an input and a corresponding expected spatial distribution of the intensity of the detection light as the output. The first image formation model describes how any arbitrary spatial distribution of the at least one fluorophore species in the sample is detected by the spatially resolved detector. The controller may determine the spatial distribution of the at least one fluorophore species in the sample using the first image formation model by varying the input of the first image formation model until a cost function that characterizes a distance between the measured data and the output of the first image formation model is minimized. The first image formation model may be written as

$$I_q(\vec{x}_s, \vec{x}_d)_{spatial}$$
$$= \alpha$$
$$\cdot \sum_n \iiint c_n(\vec{x}) h_{exc}(\vec{x} - \vec{x}_s, \lambda_{ex}) h_{det}(\vec{x} - \vec{x}_s$$
$$- \vec{x}_d, \lambda_{em}) Exc_n(\lambda_{ex}) Em_n(\lambda_{em}) Sens_{spat}(\lambda_{em}) Ill_q(\lambda_{ex}) d\vec{x} d\lambda_{ex} d\lambda_{em},$$

where $c_n(\vec{x})$ is the spatial distribution of a fluorophore species with index $n$ which is used as the input of the first image formation model, q is the index of a specific illumination sequence, $\vec{x}_s$ is a coordinate of the scan position, $\vec{x}_d$ is a coordinate on the spatially resolved detector, $\lambda_{em}$ is the emission wavelength, $\lambda_{ex}$ is the excitation wavelength, $h_{exc}$ is the excitation point spread function, $h_{det}$ is the detection point spread function, $Exc_n$ and $Em_n$ are the excitation and emission spectra, respectively, of the fluorophore species $n$, $Ill_q(\lambda_{ex})$ is the spectrum of excitation light in the illumination sequence with index $q$, $Sens_{spat}$ is the spectral sensitivity of the spatially resolved detector, $Ph(\vec{x}_d)$ is the detection pinhole function, and $\alpha$ is the splitting ratio between the first beam path and the second beam path. The first image formation model may comprise any or all of the aforementioned terms.

In another embodiment a second image formation model has an arbitrary spatial distribution of the at least one fluorophore species in the sample as an input and a corresponding expected spectral information of the detection light as the output. The second image formation model describes how any arbitrary spatial distribution of the at least one fluorophore species in the sample is detected by the spectrally resolved detector. The controller may determine the spatial distribution of the at least one fluorophore species in the sample using the second image formation model by varying the input of the second image formation model until a cost function that characterizes a distance between the measured data and the output of the second image formation model is minimized. The second image formation model may be written as

$$I_q(\vec{x}_s, \lambda_{em})_{spectral}$$
$$= Sens_{spec}(\lambda_{em}) \cdot (1 - \alpha)$$
$$\cdot \sum_n \iiint c_n(\vec{x}) h_{exc}(\vec{x} - \vec{x}_s, \lambda_{ex}) h_{det}(\vec{x} - \vec{x}_s$$
$$- \vec{x}_d, \lambda_{em}) Exc_n(\lambda_{ex}) Em_n(\lambda_{em}) Ill_q(\lambda_{ex}) Ph(\vec{x}_d) d\vec{x} d\vec{x}_d d\lambda_{ex},$$

where $Sens_{spec}$ is the spectral sensitivity of the spectrally resolved detector, $\vec{x}_d$ is a coordinate on the spectrally resolved detector and the remaining terms are defined above with reference to the first image formation model. The second image formation model may comprise any or all of the aforementioned terms.

The first and second image formation model may further comprise terms describing other system and/or fluorophore characteristics such as a photon arrival time, noise contributions, in particular introduced by components of the detectors, a sampling rate of the detectors, and the detection pinhole function. Values, parameters, and/or mathematical expressions for each of the terms may be known from literature, system design data and/or be determined in a calibration. The first image formation model and the second image formation model can be combined by vectorial techniques into a single composite image formation model, allowing for joint processing of common terms and a joint solution of the reconstruction problem.

In another embodiment the controller is configured to determine the spatial distribution of the at least one fluorophore species in the sample using a maximum-likelihood method. Other optimization methods may be used instead. For example, the controller may be configured to determine the spatial distribution of the at least one fluorophore species in the sample by minimizing a cost function which characterizes a distance between the measured data and reconstructed data.

In particular, the controller may be configured to combine the spectral information and the spatial distribution of the intensity of the detection light using multiview deconvolution, for example. The controller may also be configured to combine the output of the first and second image formation models in a similar fashion to compare the combined sensor data with the output of the image formation models. The controller may further be configured to determine the spatial distribution of the at least one fluorophore species in the sample by minimizing a cost function that characterizes a distance between the combined measured data and the combined output of the first and second image formation models.

In another embodiment the controller is configured to determine the spatial distribution of the at least one fluorophore species in the sample based on previously determined calibration data. The calibration data describes what measured data is detected by the image scanning microscope for a specific fluorophore species, for example. In an embodiment, the controller may be configured to determine the first and second image formation models based on the calibration data. The calibration data may be stored in a local or remote memory element or in a cloud service.

In another embodiment the spatially resolved detector comprises a two-dimensional array of photodetector elements. Each photodetector element acts as a single pixel detector that captures a portion of the first part of the detection light at a different position in the two-dimensional array. Such an arrangement makes it possible to detect the two-dimensional spatial distribution of the intensity of the detection light. The two-dimensional array of photodetector elements may be a SPAD-array or SiPM-array, for example. SPAD stands for single-photon avalanche diodes and refers to a type of photodetector element characterized by their high sensitivity, their fast timing resolution, and their ability to detect single photons with high efficiency. An advantage of the SPAD-array is its capability for fast single-photon detection and precise time-resolved measurements, making it possible for the SPAD-array to be used as a time resolved detector element for detecting photon arrival times, for example. SiPM stands for Silicon Photomultiplier, another type of photodetector element, which are based on SPADs. Advantages of SiPMs include a low signal-to-noise ratio, a high gain, a low operating voltage, their compact size, and their robustness. Like the SPAD-array, the SiPM-array enable fast single-photon detection and may be used as the time resolved detector element.

In another embodiment the spatially resolved detector comprises an array of photodetector elements, and a fiber-bundle configured to guide the second part of the detection light onto the array of photodetector elements. The array of photodetector elements may be one-dimensional or linear array of photodetector elements in particular. The photodetector elements may be PMT, SPAD or SiPM, for example. A first end of the fiber bundle may comprise a two-dimensional array of optical fibers. Each optical fiber may be arranged to receive a portion of the first part of the detection light at a different position in the two-dimensional array. A second end of the fiber bundle may be arranged at the array of photodetector elements such that each optical fiber guides a portion of the first part of the detection light onto one of the photodetector elements. Such an arrangement also enables detecting the two-dimensional spatial distribution of the intensity of the detection light.

In another embodiment the spectrally resolved detector comprises at least one spectral encoding element configured to change the spatial distribution of the intensity of the second part of the detection light. The spectrally resolved detector may further comprise a photodetector element or an array of photodetector elements arranged downstream of the spectral encoding element and configured to detect a spatial distribution of the intensity of the second part of the detection light. The spectral encoding element may comprise at least one of a dispersing prism, a planar grating, a volume grating, a grism, a diffractive optical element, and an array of wavelength selective filters, for example a Bayer-mask. The photodetector elements may be PMT, SPAD, or SiPM, for example. The second part of the detection light is modulated by the spectral encoding element based on the wavelength of the second part of the detection light. For example, the spectral encoding element may be a diffractive element that deflects different wavelengths by a different amount. The modulated detection light is then received by the array of photodetector elements, which detects the spatial distribution of the intensity of the modulated second part of the detection light. Based on the modulation pattern, the spectral information can be determined. In an embodiment, the controller is configured to determine the spectral information based on the spatial distribution of the intensity of the second part of the detection light.

In another embodiment the spectrally resolved detector comprises a selection unit arranged downstream of the spectral encoding element and configured to selectively block a part of the spatial distribution of the intensity of the modulated second part of the detection light from reaching the photodetector element. By selectively blocking, the selection unit determines light of which wavelength range reaches the photodetector element. The spectral information can then be determined based on a setting of the selection unit. Exemplary detection arrangements comprising a selection unit are described in WO 95/07447 A1 and in WO 99/39231 A1.

In another embodiment at least one of the spatially resolved detector and the spectrally resolved detector is configured to detect a photon arrival time of a photon of the detection light. This enables the image scanning microscope to determine a fluorescence lifetime of the at least one fluorophore species, for example, as an additional information. Based on the additional information, the at least one fluorophore species can be reliably identified. The excitation light source may be configured to generate the excitation light from pulsed laser light. By recording the arrival times of individual photons with respect to a laser pulse generated by the excitation light source, it is possible to determine fluorescence lifetime characteristics.

In another embodiment the detection arrangement comprises a pinhole arranged upstream of the beam splitting element in a beam path of the detection light. The pinhole is a spatial filter that excludes out-of-focus light, thereby enhancing the imaging quality. Other spatial filters may be used instead of or in addition to the pinhole, for example a digital mirror device (DMD) or other spatial light modulators (SLM). The pinhole might be arranged in the beam path in accordance with the arrangement of a pinhole of a conventional confocal laser scanning microscope.

In another embodiment the image scanning microscope comprises a main beam splitter configured to direct the excitation light into the objective lens via the scanning unit, and to direct the detection light into the detection arrangement. The main beam splitter may comprise at least one of an acousto-optical beam splitter, a dichroic beam splitter, an optical filter (in particular an exchangeable optical filter), and a filter wheel or a filter slider. The excitation light may be reflected in the sample space and by passing the main beam splitter leak into the detection arrangement. The acousto-optical device can be controlled to selectively deflect certain wavelengths or wavelength bands. This property is used to deflect the leaked excitation light away from the detection arrangement. An exemplary main beam splitter comprising an acousto-optical device is disclosed in WO 99/42884 A1. The dichroic beam splitter can be used in similar fashion to deflect the wavelengths of the excitation light away from the detection arrangement. The optical filter and the filter wheel may be used to block the excitation light from entering the detection arrangement to the same effect.

In another embodiment, the beam splitting element is configured to direct a first polarized component of the detection light into the first beam path as the first part, and to direct a second polarized component of the detection light into the second beam path as the second part. In this embodiment, the detection light is split into the first and second parts based on polarization. Assuming unpolarized light, for example fluorescence, this means that the detection light is split almost evenly. Such an even split may also be achieved by employing a neutral beam splitter having a reflection/transmission ratio of 1 or close to 1. In another embodiment, the reflection/transmission ratio is chosen such that the number of photons detected per spatial detector element and spectral detector element is essentially equal. The number of photons per spatial detector element can be inferred by the size and distribution of the detector elements over the Airy disc. The number of photons per spectral detector element can be inferred from the spectral dispersion and sampling of the spectral arrangement together with the emission spectrum of the fluorophores. This evens out the SNR ratios of both beam paths/models.

In another embodiment the excitation light source comprises a super-continuum laser and/or multiple single-wavelength lasers. In this embodiment, it is possible to dynamically generate laser light with multiple different wavelengths as the excitation light. This makes it possible to adapt the excitation light to the excitation spectra of many different fluorophores, making the image scanning microscope very versatile.

The invention further relates to a method for determining a spatial distribution of at least one fluorophore species in a sample. The method comprises the following steps:

a) Generating excitation light using an excitation unit. b) Selectively directing the excitation light into different regions of the sample using a main beam splitter, a scanning unit, and an objective lens. c) Receiving detection light from the sample using the objective lens and directing the detection light into a detection arrangement. d) Directing a first part of the detection light into a first beam path, and a second part of the detection light into a second beam path using a beam splitting element. e) Detecting a spatial distribution of the intensity of the first part of the detection light using a spatially resolved detector. f) Detecting a spectral information of the second part of the detection light using a spectrally resolved detector. h) Determining the spatial distribution of the at least one fluorophore species in the sample based on the spatial distribution of the intensity of the first part of the detection light and the spectral information of the second part of the detection light.

The method has the same advantages as the detection arrangement, or the image scanning microscope described above. In particular, the method may be supplemented with the features described in this document in connection with the detection arrangement or the image scanning microscope. Furthermore, the detection arrangement or the image scanning microscope described above may be supplemented with the features described in this document in connection with the method.

Short Description of the Figures

Hereinafter, specific embodiments are described referring to the drawings, wherein:

Figure 1     is a schematic view of an image scanning microscope according to an embodiment;

Figure 2     is a schematic view of the image scanning microscope according to another embodiment;

Figure 3     is a flowchart of the method for determining a spatial distribution of at least one fluorophore species in a sample; and

Figure 4     is a flowchart of a calibration that may be performed as part of the method according to Figure 3.

Detailed Description

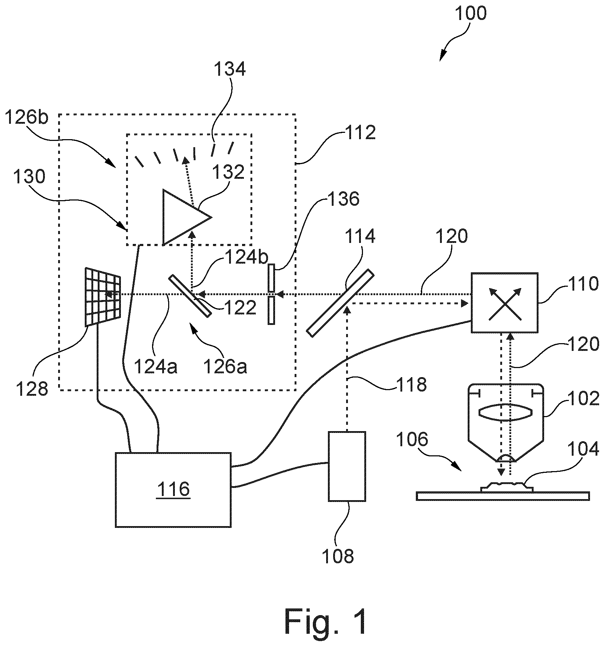

Figure 1 is a schematic view of an image scanning microscope 100 according to an embodiment. The image scanning microscope 100 exemplary comprises a single objective lens 102 directed at a sample 104 arranged in a sample space 106. The image scanning microscope 100 further comprises an excitation unit 108, a scanning unit 110, a detection arrangement 112, a main beam splitter 114, and a controller 116.

The excitation unit 108 is configured to generate excitation light 118, for example laser light with a single wavelength or a narrow wavelength band. For this, the excitation unit 108 may comprise one or more lasers. Each laser may be configured to generate laser light having one single wavelength or a narrow wavelength band. In an embodiment, the excitation unit 108 may comprise a continuum laser and an arrangement of exchangeable filters or a tunable laser to selectively generate excitation light 118 with different wavelengths. In another embodiment, the excitation unit 108 may be configured to generate modulated light, for example pulsed light. The excitation unit 108 may comprise further optical elements such as lenses and apertures for forming a light beam from the excitation light 118, which are not shown in Figure 1.

The excitation light 118 generated by the excitation unit 108 is directed by the main beam splitter 114 towards the scanning unit 110. The scanning unit 110 is configured to deflect the excitation light 118 to selectively direct the excitation light 118 into different regions of the sample space 106 via the objective lens 102, for example in a meandering fashion. This makes it possible to successively illuminate the sample 104 at different scan positions using the excitation light 118 focused by the objective lens 102. To deflect the excitation light 118, the scanning unit 110 may comprise one or more galvanometric mirrors or acousto-optic deflectors, for example. The beam path of the excitation light 118 is shown in Figure 1 using dashed lines originating at the excitation unit 108 and ending at the sample 104. Using the excitation unit 108, the sample 104 may be illuminated in multiple illumination sequences. Each illumination sequence may be distinguished from other illumination sequences in at least one excitation modality. The excitation modality may be the spectral composition of the excitation light 118, the intensity of the excitation light 118, or the modulation of the excitation light 118, for example.

Detection light 120 is generated by illuminating the sample 104 using the excitation light 118. In an embodiment, the excitation light 118 excites fluorophores arranged in the sample 104, which emit fluorescence light as the detection light 120. Depending on the excitation modality of the excitation light 118, different fluorophore species may be excited. For example, only some of the fluorophore species arranged in the sample 104 are excited due to the excitation light 118 having a specific narrow wavelength band. In an embodiment, the sample 104 is illuminated in successive illumination sequences. During each illumination sequence another set of fluorophore species is excited. The detection light 120 emitted by the fluorophore species is collected by the objective lens 102 and directed back towards the main beam splitter 114 via the scanning unit 110. Due to the arrangement of the scanning unit 110 between the main beam splitter 114 and the objective lens 102, the deflection of the excitation light 118 is reversed for the detection light 120. This directs the detection light 120 towards a single point regardless of a deflection angle of the scanning unit 110. The detection light 120 has been descanned, so to speak. The descanned detection light 120 is then directed by the main beam splitter 114 into the detection arrangement 112. The beam path of the detection light 120 is shown in Figure 1 using a dotted line originating at the sample 104.

The detection arrangement 112 comprises a beam splitting element 122 that is configured to split the detection light 120 into two parts 124a, 124b. The splitting ratio $\alpha$ between the first and second parts 124a, 124b is determined by the beam splitting element 122 and the composition of the detection light 120. For example, fluorescence light is generally unpolarized. A polarizing beam splitter will split fluorescence light almost evenly. In another embodiment, a neutral beam splitter having a predetermined reflection/transmission ratio may be employed as the beam splitting element 122. The reflection/transmission ratio determines the splitting ratio in such an embodiment.

The first part 124a of the detection light 120 is directed into a first beam path 126a by the beam splitting element 122. The first beam path 126a comprises a spatially resolved detector 128, which is configured to detect a spatial distribution of the first part 124a of the detection light 120. In Figure 1, the spatially resolved detector 128 is exemplary formed as a two-dimensional array of photodetector elements. Each photodetector element acts as a single pixel detector that captures a portion of the first part 124a of the detection light 120 at a different position in the array, enabling the spatially resolved detector 128 to capture the spatial distribution of the first part 124a of the detection light 120. As different scan positions are illuminated successively using the excitation light 118, at least one spatial distribution is detected at each scan position. From the collection of the spatial distributions a single high-resolution image of the sample 104 can be reconstructed. At least one of the photodetector elements may be configured to determine a photon arrival time of a photon of the detection light 120. For example, said photodetector element configured to detect a photon arrival time may be a single-photon avalanche diode (SPAD) or Silicon Photomultiplier (SiPM).

The second part 124b of the detection light 120 is directed into a second beam path 126b by the beam splitting element 122. The second beam path 126b comprises a spectrally resolved detector 130, which is configured to detect a spectral information of the second part 124b of the detection light 120. For example, the spectrally resolved detector 130 may be configured to detect the presence of at least one wavelength or wavelength band in the second part 124b of the detection light 120. In Figure 1, the spectrally resolved detector 130 comprises a spectral encoding element 132, which is exemplary formed as a dispersing prism. The spectral encoding element 132 is configured to change the spatial distribution of the intensity of the second part 124b of the detection light 120. Thereby, the spatial distribution of the intensity of the second part 124b of the detection light 120 is modulated. For example, the dispersing prism deflects longer wavelengths at smaller angles and shorter wavelengths at larger angles. The spectrally resolved detector 130 shown in Figure 1 further comprises an array 134 of photodetector elements, which is arranged downstream of the spectral encoding element 132. The array 134 is configured to detect the modulated spatial distribution of the intensity of the second part 124b of the detection light 120. The spectral information can be determined from the modulation. For example, in the case of monochromatic detection light 120, the wavelength of the monochromatic detection light 120 may be determined from the point of incidence of the second part detection light 120 on the array 134. Like with the spatially resolved detector 128, at least one of the photodetector elements of the array 134 may be configured to determine a photon arrival time of a photon of the detection light 120.

The spectrally resolved detector 130 may comprise a spatially resolved detector element, for example the array 134 of photodetector elements. However, the spectrally resolved detector 130 itself is spatially integrating, i.e. the spectral information is determined by integrating the modulated spatial distribution of the intensity of the second part 124b of the detection light 120.

In Figure 1, the detection arrangement 112 further comprises a pinhole 136 arranged at the conjugate image plane between the main beam splitter 114 and the beam splitting element 122. The pinhole 136 is a spatial filter which filters out-of-focus light, thereby only allowing detection light 120 originating from the focus region of the objective lens 102 to pass on into the detection arrangement 112.

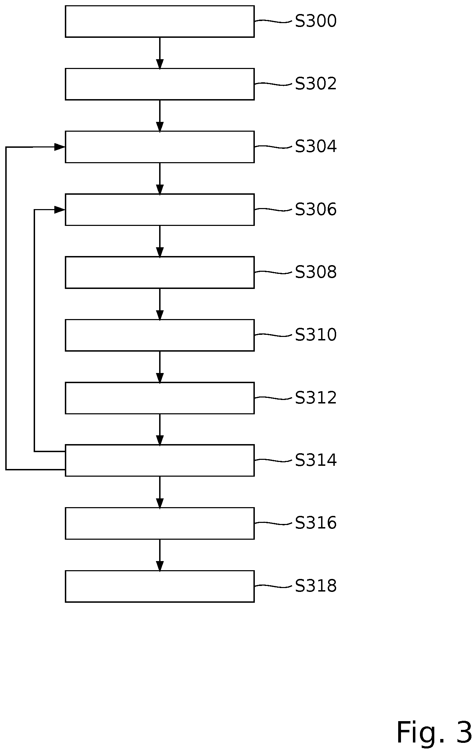

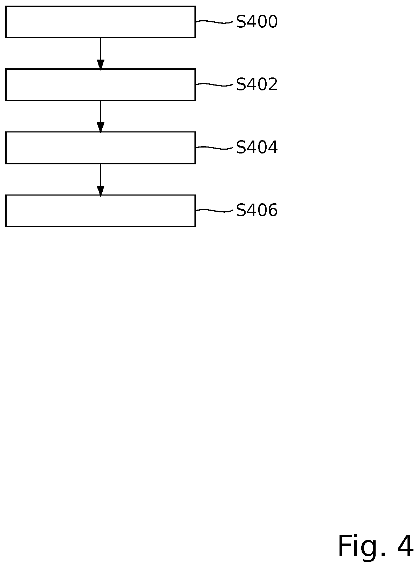

The controller 116 is configured to control the excitation unit 108, the scanning unit 110, the spatially resolved detector 128, and the spectrally resolved detector 130. The controller 116 is further configured to cause the image scanning microscope 100 to perform a method for determining a spatial distribution of at least one fluorophore species in the sample 104 based on the detected spatial distribution of the intensity of the first part 124a of the detection light 120 and the spectral information determined from the second part 124b of the detection light 120. The method is described in more detail below with reference to Figures 3 and 4.

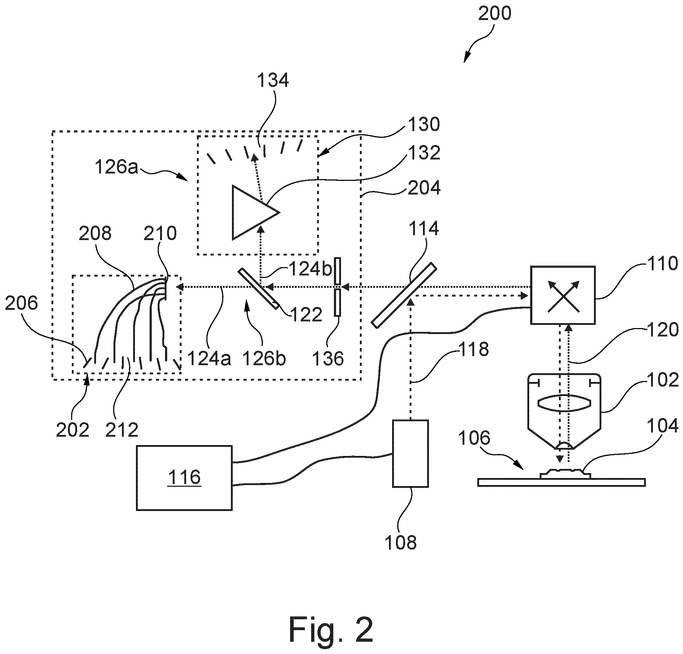

Figure 2 is a schematic view of the image scanning microscope 200 according to another embodiment. The image scanning microscope 200 according to Figure 2 is distinguished form the image scanning microscope 100 according to Figure 1 in that the spatially resolved detector 202 of the detection arrangement 204 comprises a linear array 206 of photodetector elements.

The linear array 206 is one-dimensional as opposed to the two-dimensional array of the spatially resolved detector 128 shown in Figure 1. In order to be able to detect the spatial distribution of the first part 124a of the detection light 120, the spatially resolved detector 128 further comprises a fiber-bundle 208 comprising multiple fibers, each fiber acting as a light guide. The fibers at a first end 210 of the fiber-bundle 208 are arranged in a two-dimensional array and positioned such, that each fiber captures a portion of the first part 124a of the detection light 120 at a different position. The captured portions of the first part 124a of the detection light 120 are then guided by the fibers to a second end 212 of the fiber-bundle 208. The second end 212 of the fiber-bundle 208 is arranged such at the linear array 206 of photodetector elements, that each fiber is connected to one of the photodetector elements. This arrangement makes it possible to capture the two-dimensional spatial distribution of the first part 124a of the detection light 120 using the linear array 206.

Figure 3 is a flowchart of the method for determining a spatial distribution of at least one fluorophore species in a sample 104. The method is described as being performed using the image scanning microscope 100, 200 according to Figure 1 or 2 as an example only. Before the method is started, the sample 104 may be prepared by introducing fluorophores, such as fluorescent dyes, proteins, or quantum dots, into the sample 104. Alternatively, the method may be performed using endogenous fluorophores only.

The method is started in step S300. In the optional step S302, a calibration is performed to generate calibration data. The calibration is described in more detail below with reference to Figure 4. In step S304, excitation light 118 is generated. The excitation light 118 may be pulsed in order to determine a fluorescence lifetime, for example. In an embodiment, the controller 116 controls the excitation unit 108 to generate the excitation light 118. In step 306, the excitation light 118 is then directed into the sample 104. In an embodiment, the excitation light 118 is focused onto a scan position in the sample 104 using the scanning unit 110 and the objective lens 102. The excitation light 118 then excites the fluorophores present in the sample 104, which in turn generate fluorescence light as the detection light 120. Both the emission and excitation characteristics of the fluorophore may vary based on intrinsic properties of the fluorophore, for example on the molecule used and the molecule's configuration, and on its environmental conditions, such as pH levels and temperature. For example, the same fluorophore may have a different emission spectrum based on the pH level of its immediate surroundings. Thus, the term fluorophore species is used to distinguish groups of fluorophores with different emission and/or excitation characteristics.

In step S308, the detection light 120 emitted by the fluorophore species is received and split into a first part 124a and a second part 124b. In an embodiment, the detection light 120 is received by the objective lens 102 and directed into the detection arrangement 112. The beam splitting element 122 splits the received detection light 120 into the first part 124a and the second part 124b. In step S310, a spatial distribution of the first part 124a of the detection light 120 is detected. The spatial distribution is a convolution of a (wavelength dependent) point spread function (PSF) that depends on the optical configuration of the imaging system, for example the image scanning microscope 100, 200, and the source of the detection light 120, which may be assumed to be point-like, integrated over the spectral detection range of the spatially resolved detector (see image formation model above). In an embodiment, the spatially resolved detector 128 detects the

**EP 4 707 895 A1**

spatial distribution of the first part 124a of the detection light 120. In step S312 a spectral information of the second part 124b of the detection light 120 is detected. In an embodiment, the spectrally resolved detector 130 detects the spectral information of the second part 124b of the detection light 120.

Additionally, in the optional step S314 at least one photon arrival time of the detection light 120 is detected. In an embodiment, the photon arrival time of the detection light 120 is detected by at least one photodetector element of the spatially resolved detector 128 and/or the spectrally resolved detector 130. A fluorescence lifetime measurement may be performed based on the photon arrival times detected in the step S314 as well as on a modulation of the excitation light 118. In an embodiment, the excitation light 118 may be pulsed. Delays between individual pulses of the excitation light 118 and the detected photon arrival times are determined. From the determined delays, the fluorescence lifetimes may be determined using exponential fitting of histogram data. The fluorescence lifetime measurement may be performed by the controller 116, for example.

The steps S310 to S314 may be performed concurrently or consecutively in any order and may be repeated until a region of interest of the sample 104 has been scanned. Each time, the excitation light 118 is directed into a different region of the sample 104. Thereby, different scan positions are illuminated with the excitation light 118. In an embodiment, the sample 104 is scanned with the excitation light 118 in a meandering fashion to illuminate the region of interest. For example, the excitation light 118 is selectively deflected such that it is incident under different angles at an entrance pupil of the objective lens 102, which then focusses the excitation light 118 into the different regions of the sample 104. As a result, a collection of spatial distributions of the intensity of the first part 124a detection light 120 is obtained, each spatial distribution being associated with a specific scan position. Additionally, a collection of spectral information is obtained, each spectral information as well being associated with a specific scan position. If step S314 is performed, one also obtains a collection of photon arrival times or fluorescence lifetimes, each member of the collection being associated with a specific scan position.

Further, steps S304 to S314 may be repeated, for example using a different excitation modality each time. Each repetition will be called an illumination sequence in this document. By repeating the steps S304 to S314, one obtains multiple collections of the spatial distributions, spectral information, and photon arrival times, if applicable, each being associated with a different illumination sequence. For example, in a first measurement, the region of interest is scanned using excitation light 118 according to a first excitation modality, such as a first wavelength range. In a second measurement, the region of interest is scanned again using excitation light 118 according to a second excitation modality, such as a second wavelength range different from the first wavelength range.

In step S316 the spatial distribution of the at least one fluorophore species in the sample 104 is determined, which will be denoted by $c_{j_f}(\vec{x}_s)$, where $j_f$ is an index of the fluorophore species and $\vec{x}_s$ is a spatial coordinate in the sample 104. The determination is based on the detected spatial distributions of the intensity of the first part 124a of the detection light 120. A single spatial distribution will be called $I_q(\vec{x}_s, \vec{x}_d, t)_{spatial}$ in the following, where $q$ is an index denoting the illumination sequence, $\vec{x}_s$ is a coordinate of the scan position, $\vec{x}_d$ is a coordinate on the spatially resolved detector 128, and $t$ is a coordinate on the time axis that is used when at least one photon arrival time has been determined in step S314. The determination is further based on the detected spectral information of the second part 124b of the detection light 120. A single spectral information will be called $I_q(\vec{x}_s, \lambda_{em}, t)_{spectral}$, where $q$ is the index denoting the illumination sequence, $\vec{x}_s$ is the coordinate of the scan position, $\lambda_{em}$ is the emission wavelength, and $t$ is the coordinate on the time axis. Both the spatial distribution of the intensity of the first part 124a of the detection light 120 and the spectral information of the second part 124b of the detection light 120 may be modelled using the image formation models described in this document. Another exemplary image formation model may be found in Hung, Shih-Te, Kalisvaart, Dylan, and Smith, Carlas. "Image scanning microscopy: a vectorial physical optics analysis." Optics Express, 18 July 2023. The image formation models may be used to determine the spatial distribution $c_{j_f}(\vec{x}_s)$ of the fluorophore species with index $j_f$ in the sample 104. Each of the image formation models describes how an arbitrary spatial distribution of at least one fluorophore species is imaged, for example by the image scanning microscope 100, 200.

The output of the first image formation model will be called $M_q(\vec{x}_s, \vec{x}_d, t)_{spatial}$ in order to distinguish the output from the spatial distribution $I_q(\vec{x}_s, \vec{x}_d, t)_{spatial}$ of the first part 124a of the detection light 120 measured by the spatially resolved detector 128. The output of the first image formation model may be written as

$$M_q(\vec{x}_s, \vec{x}_d, t)_{spatial} = \sum_{j_f} F_{j_f 1 q}(\vec{x}_s, \vec{x}_d, t) *_{\vec{x}_s} c_{j_f}(\vec{x}_s).$$

The output of the first image formation model $M_q(\vec{x}_s, \vec{x}_d, t)_{spatial}$ may be written as a linear superposition of fingerprints $F_{j_f 1 q}(\vec{x}_s, \vec{x}_d, t)$ which is spatially convolved with the spatial distribution $c_{j_f}(\vec{x}_s)$ of the respective fluorophore species $j_f$ in the sample 104. The symbol $*_{\vec{x}_s}$ denotes the partial convolution for the coordinate $\vec{x}_s$ of the scan position, and is defined as

$$[a *_{\vec{x}_s} b](\vec{x}_s, \Phi) = \int d\vec{x}_s{}' a(\vec{x}_s{}', \Phi_a) \, b(\vec{x}_s - \vec{x}_s{}', \Phi_b),$$

where $\Phi_{a/b} = \left\{ v_1^{(a/b)}, v_2^{(a/b)}, \dots \right\}$ is the set of all variables of the functions $a$ and b except $\vec{x}_s$. The output set of variables is the union $\Phi = \Phi_a \cup \Phi_b$. A fingerprint $F_{jf1q}(\vec{x}_s, \vec{x}_d, t)$ is a dataset that represents a system response for the respective fluorophore species $j_f$ and can be obtained by modelling and/or during the calibration step S302. Each fingerprint $F_{jf1q}(\vec{x}_s, \vec{x}_d, t)$ describes the expected spatial distribution of the first part 124a of the detection light 120 for a point-like source of the respective fluorophore species $j_f$ and includes the optical effects of the imaging system, for example the image scanning microscope 100, 200, assuming an imaging from the sample 104 plane to the detector plane, for example, the effect of the excitation PSF, the emission PSF, and various aberrations introduced by the imaging system. The fingerprints $F_{jf1q}(\vec{x}_s, \vec{x}_d, t)$ may further include at least one of the following: effects regarding the fluorescent lifetime of the fluorophore species $j_f$, which can be derived from the photon arrival times, and effects regarding the excitation spectrum of the fluorophore species $j_f$, which can be derived from the response for different excitation modalities if the steps S304 to S314 have been repeated for different excitation modalities in different illumination sequences $q$.

For the first image formation model, the fingerprint $F_{jf1q}(\vec{x}_s, \vec{x}_d, t)$ may be written as

$$F_{j_f 1q}(\vec{x}_s, \vec{x}_d, t) = \alpha \overline{L_{j_f q}^{ex}}(\vec{x}_s, t) \int d\lambda_{em} \, h_{det}(\vec{x}_s - \vec{x}_d, \lambda_{em}) Spec_{j_f 1q}^{tot}(\lambda_{em}, t),$$

using

$$\overline{L_{j_f q}^{ex}}(\vec{x}_s, t) = \int d\lambda_{ex} \left[ D_{j_f} *_t Ill_q \right](\lambda_{ex}, t) Exc_{j_f}(\lambda_{ex}) h_{exc}(\vec{x}_s, \lambda_{ex}), \text{ and}$$

where $Ill_q(\lambda_{ex}, t)$ is the spectro temporal distribution of the excitation light in the illumination sequence $q$ and $D_{j_f}(t)$ describes the temporal emission behavior of the fluorescent species. The total spectro-temporal emission light distribution is

$$Spec_{j_f 1q}^{tot}(\lambda_{em}, t) = Sens_{Spat}(\lambda_{em}) Em_{j_f}(\lambda_{em}) Filter_{1q}(\lambda_{em}, t),$$

and where $Filter_{1q}(\lambda_{em}, t)$ is a term describing the optical effects of filters or acousto-optical elements arranged between the sample 104 and the spatially resolved detector 128 and the effect of potential temporal gating or temporal weighting.

A second image formation models describes how an arbitrary spatial distribution of the at least one fluorophore species is detected by the spectrally resolved detector 130. The output of the second image formation model will be called $M_q(\vec{x}_s, \lambda_{em}, t)_{spectral}$ in order to distinguish the output from the spectral information $I_q(\vec{x}_s, \lambda_{em}, t)_{spectral}$ of the second part 124b of the detection light 120 measured by the spectrally resolved detector 130. The output of the second image formation model may be written as

$$M_q(\vec{x}_s, \lambda_{em}, t)_{spectral} = \sum_{j_f} F_{j_f 2q}(\vec{x}_s, \lambda_{em}, t) *_{\vec{x}_s} c_{j_f}(\vec{x}_s).$$

For the second image formation model, each fingerprint will be called $F_{jf2q}(\vec{x}_s, \lambda_{em}, t)$ and may further include the optical effects of the spectral encoding element 132, and effects regarding the emission spectrum of the fluorophore species $j_f$, which are encoded into the spatial distribution of the modulated second part 124b of the detection light 120 by the spectral encoding element 132. For the second image formation model, the fingerprint $F_{jf2q}(\vec{x}_s, \lambda_{em}, t)$ may be written as

$$F_{j_f 2q}(\vec{x}_s, \lambda_{em}, t)$$

$$= (1 - \alpha) Spec_{j_f 2j_s}^{tot}(\lambda_{em}, t) \overline{L_{j_f j_s}^{ex}}(\vec{x}_s, t) \int d\vec{x}_d\, h_{det}(\vec{x}_s$$

$$- \vec{x}_d, \lambda_{em}) Ph(\vec{x}_d),$$

using the total spectro-temporal emission light distribution defined as

$$Spec_{j_f 2q}^{tot}(\lambda_{em}, t) = Sens_{Spec}(\lambda_{em}) Em_{j_f}(\lambda_{em}) Filter_{2q}(\lambda_{em}, t),$$

where $Filter_{2q}(\lambda_{em}, t)$ is a term describing the optical effects of filters arranged between the sample 104 and the spectrally resolved detector 130 and the effect of potential temporal gating, temporal weighting, and/or an arrival time processing like gating at the detector 130.

If the fingerprints of the different fluorophore species $j_f$ in the sample 104 are known, the spatial distribution of the fluorophore species $j_f$ in the sample 104 may be determined using the maximum likelihood estimation (MLE) method or equivalently the negative-log-likelihood (NLL) minimization methods. In either case, the determination may be carried out by minimizing a cost function C, which characterizes a distance between the measured data and the output of the first image formation model or the second image formation model respectively. For example, the determination of the spatial distribution $c_{j_f}(\vec{x}_s)$ of the different fluorophore species $j_f$ in the sample 104 may be written as

$$c_{j_f}(\vec{x}_s) = \mathrm{argmin}_{\hat{c}_{j_f}} C\left[ I_q(\vec{x}_s, \vec{x}_d, t)_{spatial}, \sum_{j_f} \left[ F_{j_f 1q} *_{\vec{x}_s} \hat{c}_{j_f} \right](\vec{x}_s, \vec{x}_d, t) \right]$$

using the first image formation model. Assuming Gaussian noise in the measured data, it is appropriate to take the (squared) $L_2$-norm as the cost function:

$$C = \sum_{j_f} \int \int \int d\vec{x}_s d\vec{x}_d dt \left( I_q(\vec{x}_s, \vec{x}_d, t)_{spatial} - M_q(\vec{x}_s, \vec{x}_d, t)_{spatial} \right)^2.$$

In the case of assumed Gaussian noise, the spatial distribution of the fluorophore species $j_f$ can be estimated by the least squares method. If instead Poisson noise is assumed in the measured data, the appropriate cost function is the Kullback-Leibler-divergence, which leads to an iterative Richardson-Lucy-like estimation algorithm that is described, for example, in Richardson, William Hadley: "Bayesian-Based Iterative Method of Image Restoration", 1970-09-15, JOSA. Alternative solutions can be found in S Bonettini et al: Inverse Problems, 2009, 25 015002, in H. Wang et al, IEEE Trans Image Proc, 2014, 23 848, M. Guo et al., Nature Biotechnology 2020, 38 1337, and the references cited therein.

Likewise, the spatial distribution $c_{j_f}(\vec{x}_s)$ of the different fluorophore species $j_f$ in the sample 104 may be determined using the second image formation model

$$c_{j_f}(\vec{x}_s) = \mathrm{argmin}_{\hat{c}_{j_f}} C\left[ I_q(\vec{x}_s, \lambda_{em}, t)_{spectral}, \sum_{j_f} \left[ F_{j_f 2q} *_{\vec{x}_s} \hat{c}_{j_f} \right](\vec{x}_s, \lambda_{em}, t) \right]$$

using, for example, the following cost function:

$$C = \sum_{j_f} \int \int \int d\vec{x}_s d\lambda_{em} dt \left( I_q(\vec{x}_s, \lambda_{em}, t)_{spectral} - M_q(\vec{x}_s, \lambda_{em}, t)_{spectral} \right)^2.$$

The spatial distribution $I_q(\vec{x}_s, \vec{x}_d, t)_{spatial}$ of the first part 124a of the detection light 120 measured by the spatially resolved detector 128 and the spectral information $I_q(\vec{x}_s, \lambda_{em}, t)_{spectral}$ of the second part 124b of the detection light 120 measured by the spectrally resolved detector 130 may be combined into a fused signal

$$I_{qj_d}(\vec{x}_s, \vec{x}_d, \lambda_{em}, t) = I_q(\vec{x}_s, \vec{x}_d, t)_{spatial} \ (for \ j_d = 1)$$

$$= I_q(\vec{x}_s, \lambda_{em}, t)_{spectral}$$

for $j_d = 2$. Likewise, the output $M_q(\vec{x}_s, \vec{x}_d, t)_{spatial}$ of the first image formation model and the output $M_q(\vec{x}_s, \lambda_{em}, t)_{spectral}$ of the second image formation model may be combined into a fused output $M_{qj_d}(\vec{x}_s, \vec{x}_d, \lambda_{em}, t)$. The spatial distribution $c_{j_f}(\vec{x}s)$ of the different fluorophore species $j_f$ in the sample 104 may then be determined by minimizing a cost function C, which characterizes a distance between the fused signal $I_{qj_d}(\vec{x}_s, \vec{x}_d, \lambda_{em}, t)$ and the fused output $M_{qj_d}(\vec{x}_s, \vec{x}_d, \lambda_{em}, t)$, for example

$$\mathcal{C} = \sum_{j_d} \sum_{j_f} \int \int \int d\vec{x}_s d\lambda_{em} dt \left( I_{qj_d}(\vec{x}_s, \lambda_{em}, t) - M_{qj_d}(\vec{x}_s, \lambda_{em}, t) \right)^2.$$

In case the fingerprints are not known, they have to be modelled and/or determined in the calibration described below with reference to Figure 4. It is also possible to estimate unknown emission spectra $Em_{j_f}(\lambda_{em})$ and/or unknown temporal responses $D_{j_f}(t)$ of the fluorophore species $j_f$, for example, by minimizing the cost function C and using the image formation model

$$c_{j_f}(\vec{x}_s), \mathrm{Em}, \mathrm{D} = \mathrm{argmin}_{\hat{c}_{j_f}, \widehat{Em}, \widehat{D}} \mathcal{C} \left[ I_{qj_d}(\vec{x}_s, \vec{x}_d, t), \sum_{j_d} \sum_{j_f} \left[ F_{j_f j_d q} *_{\vec{x}_s} \hat{c}_{j_f} \right] (\vec{x}_s, \vec{x}_d, t) \right]$$

with the set of all unknown emission spectra $Em = \{Em_1(\lambda_{em}), ..., Em_{n_f}(\lambda_{em})\}$ and unknown temporal responses $D = \{D_1(t), ... , D_{n_f}(t)\}$.

Step S316 may be performed by the controller 116, for example. The method is then ended in step S318.

Figure 4 is a flowchart of the calibration that may be performed as part of the method according to Figure 3. Before the calibration and the method according to Figure 3 are performed, one or more reference samples may be prepared such that the spatial distribution $c_{j_f}(\vec{x}_s)$ of the fluorophore species $j_f$ in the reference sample or samples are known. Such a reference sample is also known as a technical sample, and may comprise beads, lines, a checker-board pattern, or a similar arrangement of the fluorophore species $j_f$. Alternatively, or additionally, the sample 104 itself may be prepared to contain one or more regions which comprise only one fluorophore species $j_f$ each. Alternatively, two or more reference samples may be prepared, such that each reference sample contains a single fluorophore species with an unknown spatial distribution.

The calibration is started in step 5400. In step S402 the calibration data is gathered by imaging the reference sample, and/or the regions of the sample 104 which comprise only one fluorophore species $j_f$ each using the imaging system that will be used for the actual measurement, i.e. steps S304 to S316, or an imaging system that is equivalent with respect to the measurement, for example the same model of imaging system.

Then in step S404, the fingerprints of the fluorophore species $j_f$ are determined, which are present in the reference sample, or the specially prepared regions of the sample 104. If the spatial distributions $c_{j_f}(\vec{x}_s)$ are known, the fingerprint used in the first image formation model $F_{j_f 1q}(\vec{x}_s, \vec{x}_d, t)$ can be determined by minimizing the cost function C, for example

$$F_{j_f 1q}(\vec{x}_s, \vec{x}_d, t) = \mathrm{argmin}_{\hat{F}_{j_f 1q}} \mathcal{C} \left[ I_q(\vec{x}_s, \vec{x}_d, t)_{spatial}, \left[ \hat{F}_{j_f 1q} *_{\vec{x}_s} c_{j_f} \right] (\vec{x}_s, \vec{x}_d, t) \right].$$

If the spatial distribution $c_{j_f}(\vec{x}_s)$ is not known, it may be estimated as well

$$c_{j_f}(\vec{x}_s), F_{j_f 1q}(\vec{x}_s, \vec{x}_d, t)$$

$$= \mathrm{argmin}_{\hat{c}_{j_f}, \hat{F}_{j_f 1q}} \mathcal{C} \left[ I_q(\vec{x}_s, \vec{x}_d, t)_{spatial}, \left[ \hat{F}_{j_f 1q} *_{\vec{x}_s} \hat{c}_{j_f} \right] (\vec{x}_s, \vec{x}_d, t) \right].$$

Likewise, the fingerprints $F_{j_f 2q}(\vec{x}s, \lambda_{em}, t)$ of second image formation model may be determined. The calibration is then ended in step S306.

If the fingerprints can neither be modelled nor determined from the calibration data, a blind reconstruction is also possible. This can, for example, be carried out with an expansion of the methods introduced in Neher, Richard A., Miso Mitkovski, Frank Kirchhoff, Erwin Neher, Fabian J. Theis, and André Zeug. "Blind source separation techniques for the decomposition of multiply labeled fluorescence images." Biophysical Journal, vol. 96, no. 9, 6 May 2009, pp. 3791-3800.

Identical or similarly acting elements are designated with the same reference signs in all Figures. As used herein the term "and/or" includes any and all combinations of one or more of the associated listed items and may be abbreviated as "/".

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

Reference signs

| | |
|---|---|
| 100 | Image scanning microscope |
| 102 | Objective lens |
| 104 | Sample |
| 106 | Sample space |
| 108 | Excitation unit |
| 110 | Scanning unit |
| 112 | Detection arrangement |
| 114 | Main beam splitter |
| 116 | Controller |
| 118 | Excitation light |
| 120 | Detection light |
| 122 | Beam splitting element |
| 124a, 124b | Part of the detection light |
| 126a, 126b | Beam path |
| 128 | Spatially resolved detector |
| 130 | Spectrally resolved detector |
| 132 | Spectral encoding element |
| 134 | Array |
| 136 | Pinhole |
| 200 | Image scanning microscope |
| 202 | Spatially resolved detector |
| 204 | Detection arrangement |
| 206 | Array |
| 208 | Fiber-bundle |
| 210,212 | End |

**Claims**

1. An image scanning microscope (100, 200), comprising

an excitation unit (108) configured to generate excitation light (118);
an objective lens (102) directed at a sample space (106) and configured to direct the excitation light (118) into the sample space (106) and to receive detection light (120) from the sample space (106);
a scanning unit (110) arranged along a beam path between the excitation unit (108) and the objective lens (102) and configured to selectively direct the excitation light (118) into different regions of the sample space (106) via the objective lens (102);
a detection arrangement (112, 204) comprising a beam splitting element (122) configured to receive the detection light (120), to split the detection light (120) into two parts, to direct a first part (124a) of the detection light (120) into a first beam path (126a), and to direct a second part (124b) of the detection light (120) into a second beam path (126b),
wherein the first beam path (126a) comprises a spatially resolved detector (128, 202) configured to detect a spatial distribution of the intensity of the first part (124a) of the detection light (120), and the second beam path (126b) comprises a spectrally resolved detector (130) configured to detect a spectral information of the second part (124b) of the detection light (120); and

a controller (116) configured to determine a spatial distribution of at least one fluorophore species in a sample (104) based on the spatial distribution of the intensity of the first part (124a) of the detection light (120) and the spectral information of the second part (124b) of the detection light (120).

2. The image scanning microscope (100, 200) according to claim 1, wherein the controller (116) is configured to determine the spatial distribution of the at least one fluorophore species in the sample (104) based on at least one image formation model that parametrizes the imaging behavior of the image scanning microscope (100, 200).

3. The image scanning microscope (100, 200) according to claim 2, wherein a first image formation model has an arbitrary spatial distribution of the at least one fluorophore species in the sample (104) as an input and a corresponding expected spatial distribution of the intensity of the detection light (120) as the output.

4. The image scanning microscope (100, 200) according to claim 2 or 3, wherein a second image formation model has an arbitrary spatial distribution of the at least one fluorophore species in the sample (104) as an input and a corresponding expected spectral information of the detection light (120) as the output.

5. The image scanning microscope (100, 200) according to any one of the preceding claims, wherein the controller (116) is configured to determine the spatial distribution of the at least one fluorophore species in the sample (104) using a maximum-likelihood method.

6. The image scanning microscope (100, 200) according to any one of the preceding claims, wherein the controller (116) is configured to determine the spatial distribution of the at least one fluorophore species in the sample (104) based on previously determined calibration data.

7. The image scanning microscope (100) according to any one of the preceding claims, wherein the spatially resolved detector (128) comprises a two-dimensional array of photodetector elements.

8. The image scanning microscope (200) according to any one of the claims 1 to 6, wherein the spatially resolved detector (202) comprises an array (206) of photodetector elements, and a fiber-bundle (208) configured to guide the second part (124b) of the detection light (120) onto the array (206) of photodetector elements.

9. The image scanning microscope (100, 200) according to any one of the preceding claims, wherein the spectrally resolved detector (130) comprises at least one spectral encoding element (132) configured to change the spatial distribution of the intensity of the second part (124b) of the detection light (120), and a photodetector element or an array (134) of photodetector elements arranged downstream of the spectral encoding element (132) and configured to detect a spatial distribution of the intensity of the second part (124b) of the detection light (120).

10. The image scanning microscope (100, 200) according to any one of the preceding claims, wherein at least one of the spatially resolved detector (128, 202) and the spectrally resolved detector (130) is configured to detect a photon arrival time of a photon of the detection light (120).

11. The image scanning microscope (100, 200) according to any one of the preceding claims, wherein the detection arrangement (112, 204) comprises a pinhole (136) arranged upstream of the beam splitting element (122) in a beam path of the detection light (120).

12. The optical scanning microscope according to any one of the preceding claims, comprising a main beam splitter (114) configured to direct the excitation light (118) into the objective lens (102) via the scanning unit (110), and to direct the detection light (120) into the detection arrangement (112, 204).

13. The optical scanning microscope according to any one of the preceding claims, wherein the excitation unit (108) comprises a super-continuum laser and/or multiple single-wavelength lasers.

14. A method for determining a spatial distribution of at least one fluorophore species in a sample (104), the method comprising:

a) generating excitation light (118) using an excitation unit (108);

b) selectively directing the excitation light (118) into different regions of the sample (104) using a main beam splitter (114), a scanning unit (110), and an objective lens (102);

c) receiving detection light (120) from the sample (104) using the objective lens (102) and directing the detection light (120) into a detection arrangement (112, 204);

d) directing a first part (124a) of the detection light (120) into a first beam path (126a), and a second part (124b) of the detection light (120) into a second beam path (126b) using a beam splitting element (122);

e) detecting a spatial distribution of the intensity of the first part (124a) of the detection light (120) using a spatially resolved detector (128, 202);

f) detecting a spectral information of the second part (124b) of the detection light (120) using a spectrally resolved detector (130); and

h) determining the spatial distribution of the at least one fluorophore species in the sample (104) based on the spatial distribution of the intensity of the first part (124a) of the detection light (120) and the spectral information of the second part (124b) of the detection light (120).

Fig. 1

Fig. 2

Fig. 3

Fig. 4

Europäisches
Patentamt

European
Patent Office

Office européen
des brevets

## EUROPEAN SEARCH REPORT

**Application Number**

EP 24 19 8495

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 10 2023 100926 A1 (ZEISS CARL MICROSCOPY GMBH [DE]) 18 July 2024 (2024-07-18) | 1,5-14 | INV. G02B21/00 G02B27/58 |
| Y | * the whole document * | 2-4 | ADD. |
| X | DE 10 2015 111702 A1 (ZEISS CARL MICROSCOPY GMBH [DE]) 26 January 2017 (2017-01-26) * the whole document * | 1-6,8,9, 12,14 | G01N21/64 |
| A | GHEZZI ALBERTO ET AL: "Multispectral compressive fluorescence lifetime imaging microscopy with a SPAD array detector", OPTICS LETTERS, vol. 46, no. 6, 15 March 2021 (2021-03-15) , page 1353, XP055899828, US ISSN: 0146-9592, DOI: 10.1364/OL.419381 Retrieved from the Internet: URL:https://opg.optica.org/DirectPDFAccess /43F38B7B-2EC3-4C4F-9F09A43C407B540B_44903 2/ol-46-6-1353.pdf?da=1&id=449032&seq=0&mo bile=no> * figure 1 * | 1-14 | |
| A | EP 2 253 983 A2 (OLYMPUS CORP [JP]) 24 November 2010 (2010-11-24) * abstract; figure 1 * | 1-14 | |
| | -/-- | | |

**TECHNICAL FIELDS SEARCHED (IPC)**

G02B
G01N

The present search report has been drawn up for all claims

| Place of search | Date of completion of the search | Examiner |
|---|---|---|
| Munich | 17 February 2025 | Windecker, Robert |

EPO FORM 1503 03.82 (P04C01)

page 1 of 3

Europäisches
Patentamt

European
Patent Office

Office européen
des brevets

# EUROPEAN SEARCH REPORT

**Application Number**

EP 24 19 8495

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | NEHER RICHARD A. ET AL: "Blind Source Separation Techniques for the Decomposition of Multiply Labeled Fluorescence Images", BIOPHYSICAL JOURNAL, vol. 96, no. 9, 6 May 2009 (2009-05-06), pages 3791-3800, XP093079215, AMSTERDAM, NL ISSN: 0006-3495, DOI: 10.1016/j.bpj.2008.10.068 * the whole document * | 2-4 | |
| A,D | HUNG SHIH-TE ET AL: "Image scanning microscopy: a vectorial physical optics analysis", OPTICS EXPRESS, [Online] vol. 32, no. 2, 15 January 2024 (2024-01-15), page 1524, XP093251125, US ISSN: 1094-4087, DOI: 10.1364/OE.500957 Retrieved from the Internet: URL:https://opg.optica.org/directpdfaccess/f9e28f80-1ced-4234-a88851c257699637_545284/oe-32-2-1524.pdf?da=1&id=545284&seq=0&mobile=no> [retrieved on 2025-02-17] * the whole document * | 1-14 | |
| | | | **TECHNICAL FIELDS SEARCHED (IPC)** |

-/--

The present search report has been drawn up for all claims

| Place of search | Date of completion of the search | Examiner |
|---|---|---|
| Munich | 17 February 2025 | Windecker, Robert |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

........................................................................................
& : member of the same patent family, corresponding document

EPO FORM 1503 03.82 (P04C01)

Europäisches Patentamt

European Patent Office

Office européen des brevets

**EUROPEAN SEARCH REPORT**

Application Number

EP 24 19 8495

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | STRASSER FRANZISKA ET AL: "Spectral image scanning microscopy", BIOMEDICAL OPTICS EXPRESS, vol. 10, no. 5, 22 April 2019 (2019-04-22), page 2513, XP093229150, United States ISSN: 2156-7085, DOI: 10.1364/BOE.10.002513 Retrieved from the Internet: URL:https://opg.optica.org/directpdfaccess /042676ad-abbf-46da-99cecfef6ae796ae_40920 5/boe-10-5-2513.pdf?da=1&id=409205&seq=0&m obile=no> * the whole document * | 1,2,5,14 | |

TECHNICAL FIELDS SEARCHED (IPC)

The present search report has been drawn up for all claims

| Place of search | Date of completion of the search | Examiner |
|---|---|---|
| Munich | 17 February 2025 | Windecker, Robert |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

&  : member of the same patent family, corresponding document

EPO FORM 1503 03.82 (P04C01)

page 3 of 3

## ANNEX TO THE EUROPEAN SEARCH REPORT
## ON EUROPEAN PATENT APPLICATION NO.

EP 24 19 8495

This annex lists the patent family members relating to the patent documents cited in the above-mentioned European search report.
The members are as contained in the European Patent Office EDP file on
The European Patent Office is in no way liable for these particulars which are merely given for the purpose of information.

17-02-2025

| Patent document cited in search report | Publication date | Patent family member(s) | Publication date |
|---|---|---|---|
| DE 102023100926 A1 | 18-07-2024 | DE 102023100926 A1 | 18-07-2024 |
| | | WO 2024153476 A1 | 25-07-2024 |
| DE 102015111702 A1 | 26-01-2017 | DE 102015111702 A1 | 26-01-2017 |
| | | US 2018196245 A1 | 12-07-2018 |
| | | WO 2017013033 A1 | 26-01-2017 |
| EP 2253983 A2 | 24-11-2010 | EP 2253983 A2 | 24-11-2010 |
| | | JP 5307629 B2 | 02-10-2013 |
| | | JP 2010271569 A | 02-12-2010 |
| | | US 2010294949 A1 | 25-11-2010 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 9507447 A1
- WO 9939231 A1
- WO 9942884 A1

**Non-patent literature cited in the description**

- **F. STRASSER et al.** *Biomed. Opt. Expr*, 2019, vol. 10, 2513
- **HUNG** ; **SHIH-TE** ; **KALISVAART** ; **DYLAN** ; **SMITH** ; **CARLAS**. Image scanning microscopy: a vectorial physical optics analysis. *Optics Express*, 18 July 2023
- **RICHARDSON** ; **WILLIAM HADLEY**. *Bayesian-Based Iterative Method of Image Restoration*, 15 September 1970
- **S BONETTINI et al.** *Inverse Problems*, 2009, vol. 25, 015002
- **H. WANG et al.** *IEEE Trans Image Proc*, 2014, vol. 23, 848
- **M. GUO et al.** *Nature Biotechnology*, 2020, vol. 38, 1337
- **NEHER** ; **RICHARD A.** ; **MISO MITKOVSKI** ; **FRANK KIRCHHOFF** ; **ERWIN NEHER** ; **FABIAN J. THEIS** ; **ANDRÉ ZEUG**. Blind source separation techniques for the decomposition of multiply labeled fluorescence images. *Biophysical Journal*, 06 May 2009, vol. 96 (9), 3791-3800